Europäisches Patentamt

European Patent Office

Office européen des brevets

(11) Veröffentlichungsnummer: **0 029 907**
**B1**

(12) **EUROPÄISCHE PATENTSCHRIFT**

(45) Veröffentlichungstag der Patentschrift:
**17.08.83**

(21) Anmeldenummer: **80106385.0**

(22) Anmeldetag: **20.10.80**

(51) Int. Cl.³: **C 08 G 8/24,** C 08 G 8/08,
D 06 P 1/56, C 09 D 11/10

(54) Formaldehyd-Kondensate, ihre Herstellung, ihre Verwendung als Fixiermittel für basische Farbstoffe und sie enthaltende Fixiermittel.

(30) Priorität: **31.10.79 DE 2944090**

(43) Veröffentlichungstag der Anmeldung:
**10.06.81 Patentblatt 81/23**

(45) Bekanntmachung des Hinweises auf die Patenterteilung:
**17.08.83 Patentblatt 83/33**

(84) Benannte Vertragsstaaten:
**CH DE FR GB LI**

(56) Entgegenhaltungen:
**DE-A-1 800 481**
**DE-C-693 770**
**GB-A-1 145 956**

(73) Patentinhaber: **BAYER AG, Zentralbereich Patente, Marken und Lizenzen, D-5090 Leverkusen 1, Bayerwerk (DE)**

(72) Erfinder: **Maurer, Werner, Dr., Domblick 8, D-5090 Leverkusen 31 (DE)**
Erfinder: **Zimmer, Johann, Schleiermacherstrasse 15, D-5090 Leverkusen 1 (DE)**
Erfinder: **Haus, Artur, Dr., Zum Eschental 8, D-5063 Overath (DE)**

Formaldehyd-Kondensate, ihre Herstellung, ihre Verwendung als Fixiermittel
für basische Farbstoffe und sie enthaltende Fixiermittel

Gegenstand der Erfindung sind Kondensationsprodukte aus Hydroxyarylcarbonsäuren, Formaldehyd, Di-hydroxyaryl-sulfonen und gegebenenfalls Phenolen. Die Kondensationsprodukte sind dadurch gekennzeichnet, daß ihre Herstellung in einer Einstufenreaktion bei pH-Werten zwischen 2 und 5 durchgeführt wird.

Vorzugsweise erfolgt die Herstellung in Abwesenheit zusätzlicher Säuren. Das Reaktionsmedium enthält dann als einzige Säure die als Reaktionskomponente eingesetzte Carbonsäure, während bekannte Produkte in Gegenwart von starken Säuren, z. B. Mineralsäuren, als Kondensationsmittel hergestellt werden.

Als Di-hydroxyaryl-sulfon ist 4,4'-Dihydroxydiphenyl-sulfon von besonderem technischem Interesse.

Als Phenole sind beispielsweise Phenol, Kresole, Chlorphenole, Dihydroxybenzole, p-Hydroxydiphenyl und insbesondere o-Hydroxydiphenyl zu nennen.

Unter Hydroxyarylcarbonsäuren sind vorzugsweise Benzolderivate zu verstehen. Von diesen sind p-Hydroxybenzosäure, o-Kresotinsäure und insbesondere Salicylsäure hervorzuheben.

Anstelle der genannten Komponenten können auch deren Gemische verwendet werden.

Das bevorzugte Molverhältnis von Hydroxyarylcarbonsäure zu Formaldehyd zu Di-hydroxyaryl-sulfon zu Phenol liegt bei 1 : 0,6 − 1,8 : 0,1 − 0,3 : 0 − 0,4, insbesondere bei 1 : 0,8 − 1,5 : 0,15 − 0,27 : 0,1 − 0,3.

Die Kondensation wird vorzugsweise bei Temperaturen von 110 − 120° C und Drücken von 0,3 − 4,0 bar, insbesondere von 1,0 − 2,5 bar, durchgeführt.

Die Kondensationsprodukte finden als Fixiermittel für basische Farbstoffe in der Textil-, Papier- und Lederindustrie Verwendung. Sie können als Pulver oder in gelöster Form eingesetzt werden. Insbesondere werden sie in alkoholischen Flexo- und Tiefdruckfarben verwendet. Sie zeigen selbst bei schwerfixierbaren Farbstoffen, z. B. bei gelben Farbstoffen vom Typ des Auramin, eine ausgezeichnete Fixierwirkung. Außerdem verbessern die erfindungsgemäßen Produkte die Wasserfestigkeit, insbesondere von Flexodrucken.

Kondensationsprodukte aus Formaldehyd, Di-hydroxyaryl-sulfonen, Hydroxyarylcarbonsäuren und gegebenenfalls Phenolen und ihre Verwendung in Färberei und Druckerei sind aus der DE-PS 693 770 und den deutschen Auslegeschriften 1 088 518, 1 124 959 und 1 128 446 bekannt.

Die bekannten Produkte werden in Gegenwart von starken Säuren wie Salzsäure, Schwefelsäure und p-Toluolsulfonsäure und mit größeren Mengen an Formaldehyd hergestellt.

Gegenüber nächstvergleichbaren Produkten dieser Veröffentlichungen zeichnen sich die erfindungsgemäßen Produkte durch eine erhöhte Löslichkeit in Alkohol aus. Sie sind dadurch ausgezeichnet zur Herstellung stabiler flüssiger Handelsmarken geeignet.

Beispiel 1

In einen Rührkessel, in dem 872 kg 30%iger Formaldehyd vorgelegt sind, trägt man 502 kg 4,4'-Dihydroxy-diphenylsulfon, 262 kg o-Hydroxydiphenyl und 1200 kg Salicylsäure ein. Hierauf wird die Mischung unter Rühren auf 115° C erhitzt. Die Entlüftung des Kessels ist dabei so gedrosselt, daß im Kessel ein Druck von 0,8 − 1,2 bar gehalten wird. Temperatur und Druck werden 3,5 Stunden aufrechtgehalten. Danach wird entspannt. Dann wird das Reaktionsgemisch noch 4 − 6 Stunden mit direktem Dampf behandelt. Dann wird der Rührer stillgesetzt. Das Kondensationsprodukt scheidet sich als untere Phase von der wäßrigen Phase ab. Das Kondensationsprodukt wird 100° C heiß auf Trockenplatten abgelassen und bei 80° C im Vakuumtrockenschrank getrocknet. Das getrocknete Produkt läßt sich leicht zu Pulver vermahlen. Es gelangt entweder als solches zur Anwendung oder wird ungemahlen in Ethanol oder Ethanol/Ethylglykol-Gemischen gelöst und als Lösung angewandt.

Beispiel 2

In einen Rührkessel, in dem 872 kg 30%iger Formaldehyd vorgelegt sind, trägt man 502 kg 4,4'-Dihydroxy-diphenylsulfon, 262 kg o-Hydroxydiphenyl und 1200 kg Salicylsäure ein. Hierauf wird die Mischung unter Rühren auf 115° C erhitzt. Die Entlüftung des Kessels ist dabei so gedrosselt, daß im Kessel ein Druck von 0,8 − 1,2 bar gehalten wird. Temperatur und Druck werden 3,5 Stunden aufrechtgehalten. Danach wird entspannt und noch 4 − 6 Stunden mit direktem Dampf behandelt. Das Kondensationsprodukt scheidet sich danach als untere Phase von der wäßrigen Phase ab. Die wäßrige Phase wird abgehebert. Das Kondensationsprodukt wird anschließend im Rührkessel durch Entwässerung im Vakuum getrocknet. Das getrocknete Produkt wird 100° C heiß auf Platten abgelassen, in denen es nach kurzer Zeit erstarrt. Durch Mahlen erhält man das Produkt in Pulverform. Ausbeute: ca. 2000 kg. Zur Herstellung einer Flüssigmarke gibt man zu dem im Kessel getrockneten Produkt mit einem Restwassergehalt von max. 5% 170 kg Ethylglykol und 1200 kg Ethylalkohol hinzu und läßt die Lösungsmittel 2 h bei ca. 50° C einwirken. Man erhält so 3300 kg einer ca. 60%igen Lösung des Kondensationsproduktes.

## Beispiel 3

In einen Rührkessel, in dem 740 kg 30%iger Formaldehyd vorgelegt sind, trägt man 502 kg 4,4'-Dihydroxy-diphenylsulfon, 262 kg o-Hydroxydiphenyl und 1200 kg Salicylsäure ein. Herauf wird die Mischung unter Rühren auf 115°C erhitzt. Die Entlüftung des Kessels ist dabei so gedrosselt, daß im Kessel ein Druck von 0,8 – 1,2 bar gehalten wird. Temperatur und Druck werden 4,5 Stunden aufrechtgehalten. Danach wird entspannt und wie im Beispiel 1 oder 2 aufgearbeitet.

## Beispiel 4

In einen Rührkessel, in dem 1130 kg 30%iger Formaldehyd vorgelegt sind, trägt man 502 kg 4,4'-Dihydroxy-diphenylsulfon, 262 kg o-Hydroxydiphenyl und 1200 kg Salicylsäure ein. Hierauf wird die Mischung unter Rühren auf 110°C erhitzt. Die Entlüftung des Kessels ist dabei so gedrosselt, daß im Kessel ein Druck von 0,6 – 1,2 bar gehalten wird. Temperatur und Druck werden 1 – 2 Stunden aufrechtgehalten. Danach wird entspannt und wie im Beispiel 1 oder 2 aufgearbeitet.

## Beispiel 5

In einen Rührkessel, in dem 872 kg 30%iger Formaldehyd vorgelegt sind, trägt man 578 kg 4,4'-Dihydroxy-diphenylsulfon, 262 kg o-Hydroxydiphenyl und 1200 kg Salicylsäure ein. Hierauf wird die Mischung unter Rühren auf 115°C erhitzt. Die Entlüftung des Kessels ist dabei so gedrosselt, daß im Kessel ein Druck von 0,8 bis 1,2 bar gehalten wird. Temperatur und Druck werden 3,5 Stunden aufrechtgehalten. Danach wird das Reaktionsgemisch 4 Stunden lang mit direktem Dampf behandelt. Dann wird der Rührer stillgesetzt, das unten sitzende Produkt auf Trockenplatten abgelassen und im Vakuumtrockenschrank bei 80°C getrocknet. Das getrocknete Produkt wird entweder zu Pulver vermahlen oder ungemahlen in Ethanol oder Ethanol/Ethylglykol-Gemischen gelöst.

## Beispiel 6

In einen Rührkessel, in dem 872 kg 30%iger Formaldehyd vorgelegt sind, trägt man 502 kg 4,4'-Dihydroxy-diphenylsulfon, 320 kg o-Hydroxydiphenyl und 1200 kg Salicylsäure ein. Hierauf wird die Mischung unter Rühren auf 115°C erwärmt. Die Entlüftung des Kessels ist dabei so gedrosselt, daß im Kessel ein Druck von 0,8 – 1,2 bar gehalten wird. Temperatur und Druck werden 3,5 Stunden aufrechtgehalten. Danach wird das Reaktionsgemisch 4 Stunden lang mit direktem Dampf behandelt. Dann wird der Rührer stillgesetzt und das Produkt wie im Beispiel 1 oder 2 aufgearbeitet.

## Beispiel 7

In einen Rührkessel, in dem 872 kg 30%iger Formaldehyd vorgelegt sind, trägt man 440 kg 4,4'-Dihydroxy-diphenylsulfon, 215 kg o-Hydroxydiphenyl und 1200 kg Salicylsäure ein. Hierauf wird die Mischung unter Rühren auf 115°C erhitzt. Die Entlüftung des Kessels ist dabei so gedrosselt, daß im Kessel ein Druck von 0,8 – 1,2 bar gehalten wird. Temperatur und Druck werden 4,5 Stunden aufrechtgehalten. Danach wird entspannt und der Rührer stillgesetzt. Die wäßrige Oberphase wird abgehebert. Das Kondensationsprodukt wird bei 110°C im Vakuum im Rührkessel bis auf einen Restwassergehalt von <5% getrocknet. Zum getrockneten Produkt gibt man 1200 kg Ethanol und läßt 2 h bei 50°C verrühren. Man erhält 3100 kg einer ca. 60%igen Lösung des Kondensationsproduktes, das in dieser Form zur Anwendung gelangen kann.

## Beispiel 8

In einen Rührkessel, in dem 872 kg 30%iger Formaldehyd vorgelegt sind, trägt man 502 kg 4,4'-Dihydroxy-diphenylsulfon, 320 kg o-Hydroxydiphenyl und 1100 kg Salicylsäure ein. Hierauf wird die Mischung unter Rühren auf 115°C erhitzt. Die Entlüftung des Kessels ist dabei so gedrosselt, daß im Kessel ein Druck von 0,8 – 1,2 bar gehalten wird. Temperatur und Druck werden 4,5 Stunden aufrechtgehalten. Danach wird entspannt. Das Reaktionsgemisch wird 6 Stunden lang mit direktem Dampf behandelt. Dann wird der Rührer stillgesetzt. Die wäßrige Oberphase wird abgehebert. Das Kondensationsprodukt wird bei 100°C im Vakuum im Rührkessel bis auf einen Restwassergehalt von <5% getrocknet. Zum getrockneten Produkt gibt man 500 kg Ethylglykol und 850 kg Ethanol und läßt 2 h bei 50°C verrühren. Man erhält 3300 kg einer ca. 60%igen Lösung des Kondensationsproduktes.

## Beispiel 9

In einen Rührkessel, in dem 872 kg Formaldehyd 30% vorgelegt sind, trägt man 502 kg 4,4'-Dihydroxydiphenylsulfon, 262 kg o-Hydroxydiphenyl und 1200 kg 4-Hydroxybenzoesäure ein. Hierauf wird die Mischung auf 115°C unter Rühren erhitzt. Die Entlüftung des Kessels ist dabei so gedrosselt, daß im Kessel ein Druck von 1,5 – 2,0 bar gehalten wird. Temperatur und Druck werden 3,5 Stunden aufrechtgehalten. Danach wird entspannt und der Rührer stillgesetzt. Das Kondensationsprodukt scheidet sich als untere Phase von der wäßrigen Phase ab. Das Kondensationsprodukt wird 100°C heiß auf Trockenplatten abgelassen und bei 80°C im Vakuumtrockenschrank getrocknet. Das getrocknete Produkt wird entweder zu Pulver vermahlen oder ungemahlen in Ethanol oder Ethanol/Ethylglykol-Gemischen gelöst.

### Beispiel 10

In einen Rührkessel, in dem 872 kg Formaldehyd 30% vorgelegt sind, trägt man 502 kg 4,4'-Dihydroxydiphenylsulfon, 262 kg o-Hydroxydiphenyl, 960 kg Salicylsäure und 264 kg o-Kresotinsäure ein. Hierauf wird die Mischung auf 120°C erhitzt. Die Entlüftung des Kessels ist dabei so gedrosselt, daß im Kessel ein Druck von 1,5–3,0 bar gehalten wird. Temperatur und Druck werden 2,5 Stunden aufrechtgehalten. Danach wird entspannt, und wie im Beispiel 1 oder 2 aufgearbeitet.

### Beispiel 11

In einen Rührkessel, in dem 872 kg Formaldehyd 30% vorgelegt sind, trägt man 502 kg 4,4'-Dihydroxydiphenylsulfon, 145 kg Phenol und 1200 kg Salicylsäure ein. Hierauf wird die Mischung auf 105–110°C unter Rühren erhitzt. Die Entlüftung des Kessels ist dabei so gedrosselt, daß im Kessel ein Druck von 0,5 bis 1,5 bar gehalten wird. Temperatur und Druck werden 6 Stunden aufrechtgehalten. Danach wird entspannt und wie im Beispiel 1 oder 2 aufgearbeitet.

### Beispiel 12

In einen Rührkessel, in dem 872 kg Formaldehyd 30% vorgelegt sind, trägt man 502 kg 4,4'-Dihydroxydiphenylsulfon, 50 kg Brenzkatechin und 1200 kg Salicylsäure ein. Hierauf wird die Mischung auf 115°C unter Rühren erhitzt. Die Entlüftung des Kessels ist dabei so gedrosselt, daß im Kessel ein Druck von 1,5–2,0 bar gehalten wird. Temperatur und Druck werden 4 Stunden aufrechtgehalten. Danach wird entspannt und wie im Beispiel 9 aufgearbeitet.

### Beispiel 13

In einen Rührkessel, in dem 872 kg Formaldehyd 30% vorgelegt sind, trägt man 502 kg 4,4'-Dihydroxydiphenylsulfon und 1410 kg Salicylsäure ein. Hierauf wird die Mischung auf 120°C unter Rühren erhitzt. Die Entlüftung des Kessels ist dabei so gedrosselt, daß im Kessel ein Druck von 1,5–3,0 bar gehalten wird. Temperatur und Druck werden 4 Stunden aufrechtgehalten. Danach wird entspannt und wie im Beispiel 9 aufgearbeitet.

## Patentansprüche

1. Kondensationsprodukte aus Hydroxyarylcarbonsäuren, Formaldehyd, Di-hydroxyaryl-sulfonen und gegebenenfalls Phenolen, dadurch gekennzeichnet, daß sie in einer Einstufenreaktion bei pH-Werten zwischen 2 und 5 hergestellt werden.

2. Kondensationsprodukte nach Anspruch 1, dadurch gekennzeichnet, daß sie in Abwesenheit zusätzlicher Säuren hergestellt werden.

3. Kondensationsprodukte nach Anspruch 1, dadurch gekennzeichnet, daß die Komponenten in einem Molverhältnis von 1 : 0,6–1,8 : 0,1–0,3 : 0–0,4, insbesondere 1 : 0,8–1,5 : 0,15–0,27 : 0,1–0,3 eingesetzt werden.

4. Kondensationsprodukte nach Anspruch 1, dadurch gekennzeichnet, daß sie bei Temperaturen von 100–130°C und bei Drücken von 0,3–4,0 bar, insbesondere von 1,0–2,5 bar, hergestellt werden.

5. Verfahren zur Herstellung von Kondensationsprodukten aus Hydroxyarylcarbonsäuren, Formaldehyd, Di-hydroxyaryl-sulfonen und gegebenenfalls Phenolen, dadurch gekennzeichnet, daß man die Kondensation in einer Einstufenreaktion bei pH-Werten zwischen 2 und 5 durchführt.

6. Verfahren nach Anspruch 5, dadurch gekennzeichnet, daß man die Kondensation in Abwesenheit zusätzlicher Säuren durchführt.

7. Verwendung von Kondensationsprodukten nach Anspruch 1 als Fixiermittel für basische Farbstoffe.

8. Fixiermittel für basische Farbstoffe, dadurch gekennzeichnet, daß sie ein Kondensationsprodukt nach Anspruch 1 enthalten.

## Claims

1. Condensation products of hydroxyarylcarboxylic acids, formaldehyde, dihydroxyaryl sulphones and phenols, if desired, characterised in that they are prepared in a one-stage reaction at pH values between 2 and 5.

2. Condensation products according to Claim 1, characterised in that they are prepared in the absence of additional acids.

3. Condensation products according to Claim 1, characterised in that the components are employed in a molar ratio of 1 : 0,6–1,8 : 0,1–0,3 : 0–0,4, in particular 1 : 0,8–1,5 : 0,15–0,27 : 0,1–0,3.

4. Condensation products according to Claim 1, characterised in that they are prepared at temperatures of 100–130°C under pressures of 0,3–4,0 bars, in particular of 1,0–2,5 bars.

5. Process for the preparation of condensation products of hydroxyarylcarboxylic acids, formaldehyde, dihydroxyaryl sulphones and phenols, if desired, characterised in that the condensation reaction is carried out in a one-stage reaction at pH values between 2 and 5.

6. Process according to Claim 5, characterised in that the condensation reaction is carried out in the absence of additional acids.

7. Use of condensation products according to Claim 1 as fixing agents for basic dyestuffs.

8. Fixing agents for basic dyestuffs, characterised in that they contain a condensation product according to Claim 1.

**Revendications**

1. Produits de condensation d'acides hydroxyarylcarboxyliques, du formaldéhyde, de di-hydroxyaryl-sulfones et le cas échéant de phénols, caractérisés en ce qu'ils sont préparés dans une réaction en un stade à des pH de 2 à 5.

2. Produits de condensation selon la revendication 1, caractérisés en ce qu'ils sont préparés en l'absence d'autres acides.

3. Produits de condensation selon la revendication 1, caractérisés en ce que les composants sont mis en oeuvre à des proportions molaires 1 : 0,6 à 1,8 : 0,1 à 0,3 : 0 à 0,4, plus spécialement de 1 : 0,8 à 1,5 : 0,15 à 0,27 : 0,1 à 0,3.

4. Produits de condensation selon la revendications 1, caractérisés en ce qu'ils sont préparés à des températures de 100 à 130°C et des pressions de 0,3 à 4,0 bar, plus particulièrement de 1,0 à 2,5 bar.

5. Procédé de préparation de produits de condensation d'acides hydroxyarylcarboxyliques, du formaldéhyde, de di-hydroxyaryl-sulfones et le cas échéant de phénols, caractérisé en ce que l'on effectue la condensation dans une réaction en un stade à des pH de 2 à 5.

6. Procédé de préparation selon la revendication 5, caractérisé en ce que l'on effectue la condensation en l'absence d'autres acides.

7. Utilisation des produits de condensation selon la revendication 1, en tant que fixateurs pour des colorants basiques.

8. Fixateurs pour colorants basiques, caractérisés en ce qu'ils contiennent un produit de condensation selon la revendication 1.